# EUROPEAN PATENT APPLICATION

(11) **EP 1 108 938 A2**
(43) Date of publication of application: **20.06.2001**
(21) Application number: 00124362.5
(22) Date of filing: 20.11.2000
(51) Int. Cl.: F16L 13/16

(54) **Tubing with connecting piece**

(30) Priority: 16.12.1999 DE 19960650
(71) Applicant: ITT MANUFACTURING ENTERPRISES, INC., Wilmington, Delaware 19801 (US)
(72) Inventor: Sausner, Andreas, 60413 Frankfurt (DE)
(74) Representative: Dreiss, Fuhlendorf, Steimle & Becker

(57) **Abstract**

The invention proposes a connection between tubing (2) and hose (16) which can be easily and inexpensively produced, requires little installation space and results in favorable hydraulic properties. The connection is realized by means of a connecting piece (8) that is integrally formed onto the tubing (2).

## Description

The invention pertains to a tubing with an outside diameter and an inside diameter as well as a connecting piece between a hose and the tubing.

Connections between tubing and hose are required in many technical fields, particularly, the automotive industry. In this case, the objective consists of connecting different criteria to one another optimally [sic]. Manufacturing costs are of particular importance for the commercial success of a product when large quantities are produced. Consequently, the tubing as well as the corresponding hose must be as inexpensive as possible. approximately corresponds to the outside diameter of the tubing and to push the hose over the end of the tubing. Subsequently, this connection can be secured by means of a hose clamp, a clamping sleeve, etc. The disadvantage of such a connection is that the hose has a significantly larger outside diameter than the tubing, and that the inside diameter of the hose is larger than that of the tubing. Thus an unnecessarily large volume results within the region of the hose. In addition, hoses with larger diameters are more expensive than hoses with smaller diameters.

DE 297 13 845 U1 proposes a press fitting for connecting plastic tubes which contains a connecting body on one end, with the outside diameter of the connecting body being slightly smaller than that of the tube to be connected. In this way, it is possible to choose the outside diameters of the tubes to be connected identically. The disadvantage of this solution is that the press fitting represents a special component that must be connected to the tubing in a pressure-tight and fluid-tight fashion. This increases the manufacturing expenditure as well as the production costs. In addition, the press fitting reduces the flow cross section in the interior of the tubing and the hose over its entire length.

The present invention is based on the objective of making available tubing that can be easily and inexpensively connected to a hose, with the hydraulic properties of said tubing and said hose also being improved in comparison to known solutions.

According to the invention, this objective is attained with tubing that has an outside diameter and an inside diameter, with a connecting piece being integrally formed onto at least one end of the tubing, and with the outside diameter of said connecting piece being reduced in comparison to the outside diameter of the tubing.

Due to this integral connecting piece according to the invention, it is possible to push a hose, the inside diameter of which essentially corresponds to the inside diameter of the tubing, directly onto the tubing and the respective connecting piece. Other advantages of this connection are that the connecting piece is integrally formed onto the end of the tubing, and that the aforementioned reduction in the flow cross section only takes place within the region of the connecting piece. In addition, the wall thickness of the connecting piece essentially corresponds to that of the tubing, i.e., the reduction in the flow cross section within the region of the connecting piece is held to a minimum. Due to the fact that the connecting piece is formed by an end section of the tubing, sealing problems between the tubing and the press fitting as well as corrosion problems or similar problems caused by different material compositions are eliminated.

In one variant of the invention, it is proposed that the connecting piece be essentially cylindrical such that the hose can be easily pushed over the connecting piece, if so required, with a constant prestress.

In another embodiment of the invention, it is proposed that the connecting piece contain at least one annular circumferential depression and/or at least one annular circumferential rib such that a positive connection and consequently an increased tightness between the hose and tubing and the respective connecting piece is achieved.

In another embodiment of the invention, it is proposed to manufacture the tubing of steel, aluminum or plastic such that the tubing according to the invention can be used under various conditions.

It is proposed to utilize the tubing according to the invention in a brake system, a hydraulic system or a fuel supply system, particularly, of motor vehicles, such that the manufacturing and cost advantages of the tubing according to the invention become particularly evident due to the large quantities used in the automotive industry.

The previously described objective is also attained with a connection between hose and tubing, with the tubing consisting of tubing according to one of Claims 1-6, and with the hose being pushed onto the connecting piece. Due to this type of connection, the previously described advantages can be realized in a connection between hose and tubing.

According to an embodiment of the invention, it is proposed that the hose be connected to the connecting piece by means of a clamping sleeve such that a positive and pressure-tight connection between the hose and the tubing is achieved. In addition, the hose and tubing essentially have the same small diameter of the tubing, i.e., the costs for the hose are reduced, the fluid volume in the hose is reduced and the space requirement for the hose and the connection between the hose and the tubing is reduced.

In another embodiment of the invention, it is proposed that the clamping sleeve in the compressed state have an outer contour that corresponds to the annular circumferential depression(s) or to the annular circumferential rib(s) such that a positive connection between the connecting piece, the hose and the press fitting is achieved in addition to the positive connection achieved by compressing the clamping sleeve.

Additional advantages and advantageous embodiments of the invention appear from the following description, the figures and the claims.

One embodiment example of the object of the invention is illustrated in the figures and described in greater detail below. The figures show in the form of partial longitudinal sections:
- Figure 1: a first embodiment of the tubing according to the invention with a connecting piece;
- Figure 2: a second embodiment of the tubing according to the invention;
- Figure 3: the connection between the tubing according to the invention and a hose; and
- Figure 4: a press connection between the tubing according to the invention and a hose.

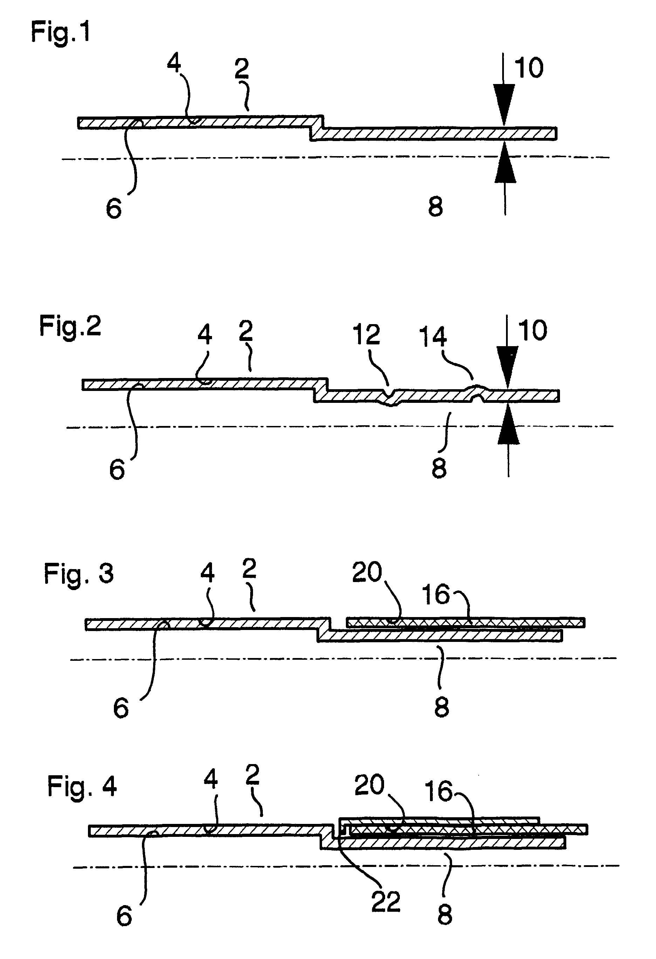

Figure 1 shows tubing 2 with an outside diameter 4 and an inside diameter 6. A connecting piece 8 is integrally formed onto the tubing 2. The connecting piece 8 is produced by correspondingly shaping one end region of the tubing 2. Consequently, the connecting piece essentially has the same wall thickness 10 as the tubing 2. This figure indicates that the flow cross section of the tubing 2 is only reduced within the region of the connecting piece 8. In this way, the hydraulic properties, particularly, the flow resistance, of the tubing 2 according to the invention with the connecting piece 8 are particularly advantageous. Due to the fact that the connecting piece 8 is formed by one end region of the tubing 2, additional components, e.g. press fittings or the like, are eliminated; sealing problems between the tubing 2 and the connecting piece 8 are also eliminated, with the manufacturing costs being very low.

Figure 2 shows the tubing 2 with a connecting piece 8. The connecting piece 8 contains a circumferential depression 12 and a circumferential rib 14. The depression 12 and the rib 14 increase the tightness between a hose (not shown in Figure 2) and the connecting piece 8, onto which the hose is pushed. In addition, the depression and the rib allow a positive press connection between the tubing 2 and the not-shown hose.

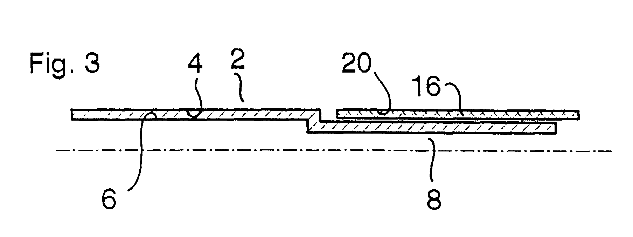

Figure 3 shows the tubing according to Figure 1, onto which a hose 16 is pushed. One can clearly ascertain that the outside diameter 4 of the tubing 2 and the outside diameter 20 of the hose 16 are essentially identical such that the spatial requirements are reduced and no protruding edges or the like are formed within the region of the connection between the tubing 2 and the hose 16. This also simplifies assembly.

Figure 4 shows tubing 2 that is positively connected to a hose 16 by means of a clamping sleeve 22. Naturally, it would also be possible to connect tubing according to the second embodiment shown in Figure 2 to a hose 16 and a clamping sleeve 20. In this case, it is particularly advantageous if the outer contour of the clamping sleeve 20 corresponds to the outer contour of the connecting piece 8.

All characteristics disclosed in the description and the following claims and illustrated in the figures may be essential to the invention individually as well as in any given combination.

## Claims

1. Tubing with an outside diameter (4) and an inside diameter (6), characterized by the fact that a connecting piece (8) is integrally formed onto at least one end of the tubing (2), with the outside diameter of the connecting piece being reduced in comparison to the outside diameter (4) of the tubing (2).

2. Tubing according to Claim 1, characterized by the fact that the connecting piece (8) essentially has a cylindrical shape.

3. Tubing according to Claim 1 or 2, characterized by the fact that the connecting piece (8) contains at least one annular circumferential depression (12).

4. Tubing according to one of Claims 1-3, characterized by the fact that the connecting piece (8) contains at least one annular circumferential rib (14).

5. Tubing according to one of the previous claims, characterized by the fact that the tubing (2) is made of steel, aluminum or plastic.

6. Tubing according to one of the previous claims, characterized by the fact that the tubing (2) is used in a brake system, a hydraulic system or a fuel supply system, particularly, of motor vehicles.

7. Connection between a hose (16) and a tubing (2), characterized by the fact that the tubing (2) consists of a tubing according to one of the previous claims, and by the fact that the hose (16) is pushed onto the connecting piece (8).

8. Connection according to Claim 7, characterized by the fact that the hose (16) is connected to the connecting piece (8) by means of a clamping sleeve (22).

9. Connection according to Claim 8, characterized by the fact that the clamping sleeve (22) has an outer contour in the compressed state that corresponds to the annular circumferential depression(s) (12) or the annular circumferential rib(s) (14).
